# EUROPEAN PATENT APPLICATION

(11) **EP 4 393 311 A1**
(43) Date of publication of application: **03.07.2024**
(21) Application number: 23217556.2
(22) Date of filing: 18.12.2023
(51) Int. Cl.: A23C 9/13, A23C 9/137, A23C 9/15, A23C 9/14, A23C 9/152

(54) **METHOD OF PRODUCING YOGURT MILK**

(30) Priority: 30.12.2022 EP 22217418
(71) Applicant: Tetra Laval Holdings & Finance S.A., 1009 Pully (CH)
(72) Inventor: Doebelin, Tobias, 8152 Glattbrugg (CH); Koller, Rolf, 8152 Glattbrugg (CH); Heitmann, Volker, 8152 Glattbrugg (CH); Cronström, Carin, 21186 Lund (SE); Lindgren, Katarina, 22186 Lund (SE); Sjöström, Kenneth, 22186 Lund (SE)
(74) Representative: Tetra Pak - Patent Attorneys SE

(57) **Abstract**

A method (200) of producing yogurt milk (YM) from raw milk (RM) is provided. The method (200) comprises separating (201) the raw milk (RM) into skim milk (SM) and cream (C), providing (203) a food powder (FP) that comprises at least 80% solids, mixing (205) the skim milk (SM) and the food powder (FP) to form a mixture (M), combining (209) the mixture (M) and at least part (C1) of the cream (C) to form yogurt milk (YM), and pasteurizing (211) the yogurt milk (YM).

## Description

### Technical Field

The invention relates to a method of producing yogurt milk and a method of producing yogurt.

### Background Art

Industrial production of yogurt in a so-called yogurt line comprises a number of steps of processing raw milk into yogurt milk, and thereafter processing the yogurt milk into yogurt. Such a process usually includes two pasteurization steps with an intermediate mixing step where dry ingredients are added. The first pasteurization step is typical milk pasteurization at e.g. 72 °C for 20 seconds. Cream separation, standardization and homogenization are also performed. The pasteurized milk is formulated by dry ingredients addition in the mixing step, which is typically done in batches. Skim milk powder, sugar and often various stabilizers such as starch and pectin are examples of components that may be added to the pasteurized milk in the mixing step. Typically, the powder is first mixed with a liquid to form a slurry and the slurry is then mixed with the pasteurized milk to form a mixed product. Thereafter, the mixed product is homogenized and subjected to a second pasteurization to form yogurt milk. The yogurt milk is transferred to fermentation tanks where yogurt culture is added to ferment the yogurt milk into yogurt.

A drawback with such prior art yogurt milk and yogurt production is that it is non-optimal in terms of cost of investment in equipment as well as operational cost. Also, the yogurt milk may be negatively affected by the mixing, in particular if the mixing in intense.

### Summary

It is an object of the invention to at least partly overcome one or more of the above-identified limitations of the prior art. In particular, it is an object to provide a method of producing yogurt milk and a method of producing yogurt that allow for a reduced cost of investment in equipment e.g. a reduced line area or footprint of building. In addition, it is an object of the invention to efficiently provide yogurt milk, while still assuring the milk is treated gently.

To solve these objects, according to a first aspect of the invention a method of producing yogurt milk from raw milk is provided. The method comprises separating the raw milk into skim milk and cream. The method further comprises providing a food powder that comprises at least 80% solids. The method further comprises mixing the skim milk and the food powder to form a mixture. The method further comprises combining the mixture and at least part of the cream to form yogurt milk, and pasteurizing the yogurt milk.

Combining the mixture and the at least part of the cream to form yogurt milk is advantageous in that the cream, or at least a substantial part of the cream that forms part of the yogurt milk, is not mixed. This is based on the realization that pasteurization (heat treatment) inactivates the enzyme lipase, which is present in milk. If not inactivated this enzyme may otherwise negatively affect fat globules that are disrupted in the mixing step, giving the yogurt milk and subsequently the yogurt an undesired taste. The skim milk that is mixed can thus be skim milk which has not been heat treated, such as pasteurized or ultra-high-temperature (UHT) treated.

The method is also advantageous in that it allows for separating the raw milk into the skim milk and the cream, directly mixing the skim milk and the food powder and subsequently combining the mixture and the at least part of the cream to form the yogurt milk. In other words, the method is advantageous in that the at least part of the cream i.e. the fatty part of the raw milk is separated and combined with the mixture subsequent to the mixing of the skim milk and the food powder. Thereby, the at least part of the cream i.e. the fatty part of the raw milk is not mixed with the skim milk and the food powder in the mixing step e.g. by using a mixer which may cause the fat globule disruption problem. Hence, the method allows for elimination or at least mitigation of the fat globule disruption problem, as the at least part of the cream is combined with the mixture subsequent to the mixing of the skim milk and the food powder.

In addition, the method is advantageous in that it does not require preparing a slurry by mixing the food powder with a liquid such as water prior to the mixing with the skim milk. Thereby, the method does not require an extra tank for preparing the slurry prior to mixing with the skim milk. Hence, the method allows for a reduced line area and a reduced consumption of energy such as electricity for preparing a slurry and chemical substances e.g. water and detergent e.g. for cleaning such extra tank.

The method may be a continuous process where the food powder is continuously provided and mixed with the skim milk. Moreover, the conventional use of two pasteurization steps is replaced by a single pasteurization step that takes place subsequent to the combining step. An advantage of such effects is an increase in efficiency of the yogurt milk production process and thus also the yogurt production process. By removing the conventional initial pasteurization step and exchanging the conventional batch mixing step with a continuous mixing step, thereby removing the need for heat exchanger capacity and batch equipment capacity, a lower investment cost and a substantial decrease of the operational cost is obtained.

The separating of the raw milk into skim milk and cream may be performed at an elevated temperature using so-called hot milk separation process. For instance, a temperature of the raw milk in the separating step may be in the range of 62 °C to 64 °C. This may in turn facilitate the separating of the raw milk into skim milk and cream. Alternatively, the separating of the raw milk into skim milk and cream may not be performed at an elevated temperature. The separating of the raw milk into skim milk and cream may be performed using so-called cold milk separation. This may in turn allow for a reduced consumption of energy.

The method may further comprise homogenizing the yogurt milk. The homogenizing of the yogurt milk may be performed at an elevated temperature to facilitate the homogenizing step. Alternatively, the homogenizing of the yogurt milk may not be performed at an elevated temperature which may hence allow for a reduced consumption of energy. The homogenizing of the yogurt milk may be performed in a conventional manner which per se is known in the art.

Overall, the method is advantageous as it allows for a reduced cost of investment in equipment e.g. a reduced line area or footprint of building. For example, the method may allow for approximately 40% reduced cost of investment in the equipment, compared to the conventional method. In addition, the method is advantageous as it allows for a reduced consumption of energy such steam or electricity and reduced CO₂-emissions. For example, the method may allow for approximately 20% reduced consumption of energy, compared to the conventional method. In addition, the method is advantageous as it allows for a reduced consumption water and detergent that is conventionally required for a cleaning of the pre-treatment process area. For example, the method may allow for approximately 20% reduced consumption of water and detergent, compared to the conventional method. The method provides an efficient and sustainable production concept for preparation of yogurt milk without compromising the yogurt milk quality.

The skim milk may have no fat such as 0% or may have a little amount of fat below 0.5% such as 0.2 %, 0.1% or 0.04%. The cream may have a high amount of fat in the range of 30 % to 50 % such as 40%.

The mixing may be performed by using a mixer. The method may comprise outputting the mixture from the mixer subsequent to mixing the skim milk and the food powder.

The mixing may be performed by using one or more mixer apparatuses. The mixer may be any suitable, conventional and commercially available mixer. The mixer may comprise inlets for receiving the skim milk and the food powder. The mixer may comprise an outlet for outputting the mixture, subsequent to mixing the skim milk and the food powder.

The providing of the food powder may comprise applying a vacuum in the mixer for drawing the food powder into the mixer. The providing of the food powder may comprise applying a vacuum in the mixer for drawing the food powder into the mixer, at a position in the mixer that is below a surface of skim milk and/or mixture that is present in the mixer.

The mixing of the skim milk and the food powder may comprise performing high-shear mixing. High-shear mixing may be defined as rotating a mixing device, for example in form of a rotor, paddle, propeller, vane, turbine etc., such that the mixing device has a peripheral speed of at least 10 m/s, at least 15 m/s, or at least 20 m/s.

The high-shear mixing is advantageous in that it may facilitate directly mixing the skim milk and the food powder to form the mixture. Thereby, there may be no need to prepare a slurry by e.g. mixing the food power with water prior to mixing with the skim milk.

The high-shear mixing may be performed by using a high-shear mixer. The high-shear mixer may comprise a tank and a rotor-stator arrangement. The rotor-stator arrangement may be arranged at the bottom of the tank. The rotor-stator arrangement may create a high-shear through the interaction between the rotor with a peripheral speed and the stator comprising a plurality of openings. The peripheral speed may be at least 10 m/s. Preferably, the peripheral speed may be at least 15 m/s. More preferably, the peripheral speed may be at least 20 m/s.

The combining may comprise combining the mixture and said at least part of the cream after at least 80% of the high-shear mixing is performed. This percentage value may be calculated as the time high-shear mixing is performed in relation to the total time the skim milk and the food powder is mixed (the toral mixing time). The high-shear mixing may be completely performed when a desired mixture is obtained.

The food powder may have a crystalline and/or amorphous form and may be free from liquid prior to the mixing with the skim milk. Free from liquid may be defined as the food powder not being a slurry, and/or as the food powder having a moisture content of less than 10 wt%, less than 7 wt% or less than 5 wt%.

Examples of the food powder comprise skim milk powder, sugar, various stabilizers such as starch and pectin, and any other powder that is conventionally used as an ingredient in yogurt milk.

The food powder may have a moisture content that is less than 10 wt%, prior to the mixing with the skim milk. The food powder may have a moisture content of less than 7 wt%, less than 5 wt%, or less than 2 wt%, prior to the mixing with the skim milk.

The combining of the mixture and said at least part of the cream may comprise combining the mixture and said at least part of the cream subsequent to outputting the mixture from the mixer. The combining of the mixture and the at least part of the cream may be performed by using a combining point or a merging point, which may have the form of a conventional pipe branch where the mixture and the at least part of the cream merge to a common flow. The combining point may be a point where the outlet of the mixer merges with a line carrying the at least part of the cream. The combining point or the merging point does not necessarily require mixer, rotor, paddle, propeller, vane, or turbine. Preferably, the flow of mixture and the flow of the at least part of the cream are regulated by valves, such that the desired amount of mixture and cream is obtained for the yoghurt milk.

All or at least 80% of the cream that is combined with the mixture may have been combined with the mixture after the mixture is outputted from the mixing system. This means that some, but less than 20% of the cream that becomes part of the yogurt milk, may be introduced in e.g. the mixer.

Thereby, all or at least 80% of the cream may not be mixed with the skim milk and the food powder in the mixing step by using the mixer. This in turn may allow for elimination or at least mitigation of the fat globule disruption problems. All or at least 80% of the cream that is combined with the mixture may be combined with the mixture at the combining point or the merging point, subsequent to outputting the mixture from the mixer.

Less than 20% of the cream that will be comprised in the pasteurized yogurt milk, may be mixed with the skim milk and the food powder in the step of mixing.

Thereby, no cream or less than 20% of the cream that will be comprised in the pasteurized yogurt milk, may be mixed with the skim milk and the food powder in the mixing step by using the same mixer. This in turn may allow for at least mitigation of the fat globule disruption problems. This is because at least 80% of the cream may be combined with the mixture subsequent to outputting the mixture from the mixer i.e. at least 80% of the cream may not be mixed with the skim milk and the food powder in the step of mixing.

The yogurt milk may be produced by using only one step of heat treatment for reducing the amount of microorganisms. Heat treatment for reducing the amount of microorganisms may be defined as heating the yogurt milk to a temperature of at least 70 °C, of at least 75 °C, or of at least 80 °C.

In one embodiment, none of the raw milk, the mixture, the cream and the yogurt milk is heat treated to a temperature above 100 °C, or above 120 °C. In one embodiment, none of the raw milk, the mixture, the cream and the yogurt milk is subjected to so called ultra-high-temperature (UHT) treatment. In one embodiment, the raw milk, the mixture, the cream and the yogurt milk is subjected to at most one step of heat treatment, said at most one step of heat treatment being one step of pasteurization.

Thereby, the yogurt milk may be produced from the raw milk by using only one step of heat treatment to reduce the amount of microorganisms. In addition, there may be no need to perform e.g. two or more steps of heat treatment. This may in turn allow for a lower investment cost and a substantial decrease of the operational cost.

The only one step of heat treatment may be a pasteurization step. The pasteurizing of the yogurt milk may be defined as heat treating of the yogurt milk at a temperature in the range of 70 °C to 80 °C for at least 10 seconds to reduce the amount of microorganisms. Alternatively, the pasteurizing of the yogurt milk may comprise heating the past yogurt milk to 72 °C to 75 °C and maintaining this temperature for 15 to 20 seconds.

According to a second aspect of the invention, a method of producing yogurt is provided. The method comprises producing yogurt milk by performing a method according to the first aspect of the invention. The method further comprises introducing a yogurt culture into the yogurt milk, and incubating the yogurt milk in which the yogurt culture was introduced, such that yogurt is formed.

The second aspect of the invention presents the same or corresponding advantages, as defined above in relation to the first aspect of the invention. The steps of introducing the yogurt culture into the yogurt milk, and incubating the yogurt milk may be performed in a manner which per se is known in the art.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is schematic illustration of a system for producing yogurt milk and yogurt,
Fig. 2 is a flowchart of a method of producing yogurt milk, and
Fig. 3 is a flowchart of a method of producing yogurt.

### Detailed Description

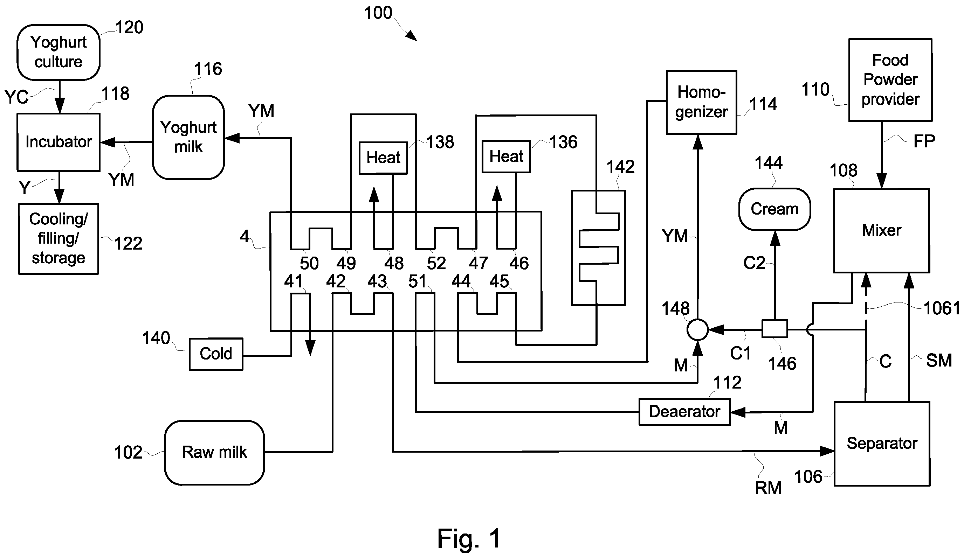

With reference to Fig. 1, an embodiment of a system 100 for producing yogurt milk YM and yogurt Y from raw milk RM comprises a number of components. It should be noted that only the major components of the system 100 are illustrated for the sake of clarity. As the skilled person will realize, the system 100 typically comprises a number of pumps and valves in and between the various components in order to enable the processing of the raw milk RM into yogurt milk YM and yogurt Y, as will be described below.

A raw milk storage unit 102 is configured to provide the raw milk RM, e.g. raw whole milk, to preheating circuits 42, 43 in a heat exchanger 4. Heat is provided to the heat exchanger 4 in heat circuits 46, 48 from a heat providing unit 136 and a heat providing unit 138, respectively. It should be noted that the preheating of the raw milk RM may not reduce the amount of microorganisms in the raw milk RM.

A separator 106 is arranged to receive the preheated raw milk RM and to separate 201 the preheated raw milk RM into skim milk SM and cream C. Optionally, the preheated milk is deaerated in a deaerator (not shown) prior to being introduced into the separator 106.

A mixer unit 108 is arranged to receive the skim milk SM and a food powder FP that comprises at least 80% solids.

The food powder may be provided by a food powder provider source 110. The food powder provider source 110 may be a container that holds the food powder FP. The food powder FP may have a crystalline and/or amorphous form. The food powder FP may be free from liquid prior to being mixed with the skim milk SM. The food powder FP may have a moisture content that is less than 10 wt%, prior to being mixed with the skim milk SM.

The mixer 108 is configured to mix the skim milk SM and the food powder FP to form a mixture M. The mixing is performed so that the desired mixture e.g. solid content is obtained. The mixing of the skim milk SM and the food powder FP may comprise performing high-shear mixing. The mixer 108 may be a high-shear mixer 108. The high-shear mixer 108 may comprise a tank and a rotor-stator arrangement (not shown). The rotor-stator arrangement may be arranged at the bottom of the tank. The rotor may be a paddle, a propeller, a vane, a turbine etc. The rotor-stator arrangement may create a high-shear by drawing the mixture into the rotor-stator arrangement and then expelling the mixture through the openings in the stator at a high speed. There may be a vacuum in the mixer 108 for drawing the food powder FP into the mixer 108. At most 20% of the cream C that will be comprised in the pasteurized yogurt milk YM, may be mixed with the skim milk SM and the food powder FP in the step of mixing.

A portion of the cream C, which portion is less than 20% of the total amount of cream that is part of the final yogurt milk, may sent from the separator 106 to the mixer 108 as shown by dotted arrow 1061. This is an alterative that may be omitted, i.e. all cream that is part of the final yogurt milk may be sent from the separator 106 to a combining point 148 where it is combined with the mixture M.

The mixture M may be outputted from the mixer 108 subsequent to mixing the skim milk SM and the food powder FP. All or the rest of cream C may be divided by a valve 146 arranged for fat standardizing the yogurt milk as desired. Surplus cream C2 may be sent to a cream storage unit 144 and may be handled as desired.

A deaerator unit 112 is configured to receive the mixture M. The deaerator unit 112 may be configured to minimize the air content of the mixture M. This enables improved fermentation time, stability and viscosity of the yogurt milk YM and the yogurt Y produced from the mixture M. The mixture M from the deaerator unit 112 may be transferred to a preheating circuit 51 in the heat exchanger 4. The mixture M and at least part C1 of the cream C is combined at the combining point 148 to form yogurt milk YM. All or at least 80% of the cream that is part of the final yogurt milk the may be combined with the mixture M subsequent to outputting the mixture M from the mixer 108. All or at least 80% of the cream C that is part of the final yogurt milk may be combined with the mixture M at the combining point 148 to form yogurt milk YM.

A homogenizer unit 114 is arranged to receive the yogurt milk YM and to homogenize the yogurt milk YM. From the homogenizer 114 the yogurt milk 109 is transferred to heating circuits 44, 45 in the heat exchanger 4 where heat is transferred to the yogurt milk YM to pasteurize 211 the yogurt milk YM. Heat providing units 136, 138 are configured to provide heat to the heat exchanger 4, typically in form of hot water or steam.

A conventional holding unit 142 is arranged to receive the heated yogurt milk YM. The holding unit 142 may hold the heated yogurt milk YM at a temperature in the range of 70 °C and 80 °C for at least 10 seconds. The yogurt milk YM may then be referred to as pasteurized.

The heat exchanger 4 is further configured with a plurality of cooling circuits 47, 52, 49, 50 where heat is transferred from the yogurt milk YM to circuits 44, 51, 49 and 50, which accomplishes cooling of the pasteurized yogurt milk YM.

A cold providing unit 140 is arranged to feed a cold media, such as ice water, into the heat exchanger 4 to absorb heat from the cooling circuit 50 via a heat absorbing circuit 41.

A yogurt milk storage unit 116 is arranged to receive cooled yogurt milk YM from the heat exchanger 4.

An incubator 118 is arranged to receive the yogurt milk YM from the yogurt milk storage unit 116. A yogurt culture storage unit 120 is arranged to introduce a yogurt culture YC into the yogurt milk YM. The incubator 118 is configured to incubate the yogurt milk YM. The incubator 118 is further configured to properly mix the yogurt culture YC with the yogurt milk YM, and to allow the yogurt milk YM to ferment until it forms yogurt Y.

A yogurt cooling and/or filling and/or storage system 122 is arranged to receive the yogurt Y from the incubator 118 and to handle the yogurt Y as desired, e.g. by packaging the yogurt into individual, packaged units and storing packets of yogurt. Cooling means that the temperature is actively decreased to inhibit the growth of microorganisms.

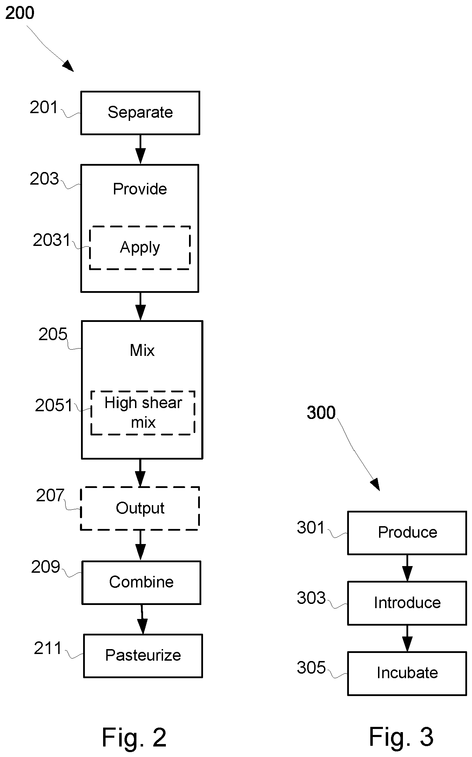

Turning to Fig. 2, a method 200 of producing yogurt milk YM from raw milk RM will be described in some more detail. The method 200 is preferably a continuous process.

The method commences with separating 201 the raw milk RM into skim milk SM and cream C. The raw milk RM may originate from the raw milk storage unit 102 and a preheating may take place in one or more preheating circuit 42, 43 in the heat exchanger 4. Preheating means that the temperature is increased to a temperature that is normally applied for homogenizing milk. It is to be noted that the preheating step is not a pasteurizing step or another heat treatment step. The preheated raw milk RM is separated 201 into skim milk SM and cream C in the separator 106.

The method 200 further comprises providing 203 a food powder FP that comprises at least 80% solids. The food powder FP may originate from the food powder provider 110. The providing 203 of the food powder 200 may comprise applying 2031 a vacuum in the mixer 108 for drawing the food powder FP into the mixer 108. The method 200 further comprises mixing 205 the skim milk SM and the food powder FP to form a mixture M. The mixing 205 may be performed by using the mixer 108, shown in Fig. 1. The mixing 205 of the skim milk SM and the food powder FP may comprise performing high-shear mixing 2051.

The method may further comprise outputting 207 the mixture M from the mixer 108 subsequent to mixing 205 the skim milk SM and the food powder FP. The method further comprises combining 209 the mixture M and at least part C1 of the cream C to form yogurt milk YM. The at least part C1 of the cream C may be a part of the cream C which may be divided by the valve 146, shown in Fig. 1.

In some embodiments, the combining 209 comprises combining the mixture M and said at least part C1 of the cream C after at least 80% of the high-shear mixing 2051 is performed.

In some embodiments, the combining 209 of the mixture M and said at least part C1 of the cream C comprises combining the mixture M and said at least part C1 of the cream C subsequent to outputting 207 the mixture M from the mixer 108.

In some embodiments, all or at least 80% of the cream C that is part of the final yogurt milk is combined with the mixture M subsequent to outputting 207 the mixture M from the mixer 108.

In some embodiments, at most 20% of the cream C that will be comprised in the pasteurized yogurt milk YM, is mixed with the skim milk SM and the food powder FP in the step of mixing 205.

The method 200 further comprises pasteurizing 211 the yogurt milk YM. The yogurt milk YM is pasteurized 211, e.g. in one or more heating circuits 44, 45 in the heat exchanger 4. In some embodiments, the yogurt milk 109 is produced by using only one step of heat treatment for reducing the amount of microorganisms. The pasteurization 211 may be the only step of pasteurization 211 that takes place in the method 200 of producing the yogurt milk YM. Parameters that define the pasteurization 211, such as the specific temperature of the yogurt milk YM and the duration of which the yogurt milk YM is subject to the specific temperature, meet all relevant legal requirements regarding reduction of undesired microorganisms. For example, pasteurization is obtained by subjecting the yogurt milk YM to a temperature in the interval 72 °C to 75 °C for a period of 15 to 20 seconds. Only one step of pasteurization 211 is performed. The preheating is done with the purpose of providing efficient homogenization and is not considered as being a step of pasteurization. There may be only one step of preheating and only one step of homogenization.

The pasteurized yogurt milk YM is then cooled, e.g. in one or more cooling circuits 47, 52, 49, 50 in the heat exchanger 4.

Turning now to Fig. 3, and with continued reference to Figs. 1 and 2, a method 300 of producing yogurt Y will be described in some more detail. The method 300 comprises producing 301 yogurt milk YM by performing the method 200, as exemplified above in relation to Figs. 1 and 2.

The method 300 further comprises introducing 303 a yogurt culture YC into the yogurt milk YM. The yogurt culture 113 may be introduced 303 into cooled pasteurized homogenized yogurt milk YM that has been produced as exemplified above. The method 300 further comprises incubating 305 the yogurt milk YM in which the yogurt culture YC was introduced, such that yogurt Y is formed. The cooled pasteurized homogenized yogurt milk YM that has been provided with the yogurt culture YC may then be incubated 305 during a predetermined time period during which the yogurt Y is formed. The yogurt 113 may then be cooled further, which may take place prior to or subsequent to an optional step of filling the yogurt Y into individual packages.

From the description above follows that, although various embodiments of the invention have been described and shown, the invention is not restricted thereto, but may also be embodied in other ways within the scope of the subject-matter defined in the following claims.

## Claims

**1.** A method (200) of producing yogurt milk (YM) from raw milk (RM), the method (200) comprising:
separating (201) the raw milk (RM) into skim milk (SM) and cream (C),
providing (203) a food powder (FP) that comprises at least 80% solids,
mixing (205) the skim milk (SM) and the food powder (FP) to form a mixture (M),
combining (209) the mixture (M) and at least part (C1) of the cream (C) to form yogurt milk (YM), and
pasteurizing (211) the yogurt milk (YM).

**2.** The method (200) according to claim 1, wherein
the mixing (205) is performed by using a mixer (108), and wherein the method comprises outputting (207) the mixture (M) from the mixer (108) subsequent to mixing (205) the skim milk (SM) and the food powder (FP).

**3.** The method (200) according to claim 1 or 2, wherein
the providing (203) of the food powder (200) comprises applying (2031) a vacuum in the mixer (108) for drawing the food powder (FP) into the mixer (108).

**4.** The method (200) according to any preceding claim, wherein
the mixing (205) of the skim milk (SM) and the food powder (FP) comprises performing high-shear mixing (2051).

**5.** The method (200) according to claim 4, wherein
the combining (209) comprises combining (209) the mixture (M) and said at least part (C1) of the cream (C) after at least 80% of the high-shear mixing (205) is performed.

**6.** The method (200) according to any preceding claim, wherein
the food powder (FP) has a crystalline and/or amorphous form and is free from liquid prior to the mixing (205) with the skim milk (SM).

**7.** The method (200) according to any preceding claim, wherein
the food powder (FP) has a moisture content that is less than 10 wt%, prior to the mixing (205) with the skim milk (SM).

**7.** The method (200) according to any of claims 2-6, wherein
the combining (209) of the mixture (M) and said at least part (C1) of the cream (C) comprises combining (209) the mixture (M) and said at least part (C1) of the cream (C) subsequent to outputting (207) the mixture (M) from the mixer (108).

**9.** The method (200) according to claim 8, wherein
all or at least 80% of the cream (C) that is combined with the mixture (M) has been combined with the mixture (M) after the mixture (M) is outputted from the mixing system (108).

**10.** The method (200) according to any preceding claim, wherein
no cream, or at most 20% of the cream (C) that will be comprised in the pasteurized yogurt milk (YM), is mixed with the skim milk (SM) and the food powder (FP) in the step of mixing (205).

**11.** The method (200) according to any preceding claim, wherein
the yogurt milk (109) is produced by using only one step of heat treatment for reducing the amount of microorganisms.

**12.** A method (300) of producing yogurt (Y), the method (300) comprising:
producing (301) yogurt milk (YM) by performing a method (200) according to any preceding claim,
introducing (303) a yogurt culture (YC) into the yogurt milk (YM), and
incubating (305) the yogurt milk (YM) in which the yogurt culture (YC) was introduced, such that yogurt (Y) is formed.
